# EUROPEAN PATENT SPECIFICATION

(11) **EP 4 245 571 B1**
(45) Date of publication and mention of the grant of the patent: **04.09.2024**
(21) Application number: 23157452.6
(22) Date of filing: 20.02.2023
(51) Int. Cl.: B60C 11/03, B60C 11/13

(54) **TIRE**
REIFEN
PNEUMATIQUE

(30) Priority: 14.03.2022 JP 2022039480
(43) Date of publication of application: 20.09.2023
(73) Proprietor: Sumitomo Rubber Industries, Ltd., Kobe-shi, Hyogo 651-0072 (JP)
(72) Inventor: OKA, Kentaro, Kobe-shi, 651-0072 (JP); ABE, Shotaro, Kobe-shi, 651-0072 (JP); SANAE, Ryuhei, Kobe-shi, 651-0072 (JP); NAKAJIMA, Sho, Kobe-shi, 651-0072 (JP)
(74) Representative: Manitz Finsterwald Patent- und Rechtsanwaltspartnerschaft mbB

(56) References cited:
- EP-A1- 2 311 661
- WO-A1-2019/123277
- WO-A1-2021/089960

## Description

### BACKGROUND OF THE INVENTION

### Field of the Invention

The present invention relates to a tire.

### Background Art

Japanese Laid-Open Patent Publication No. 2019-156025 proposes a tire provided with a tread portion having a plurality of inclined grooves extending obliquely from a first tread end on one side of the tread portion in the tire axial direction to a tire equator side.

The tire provided with the inclined grooves as in Japanese Laid-Open Patent Publication No. 2019-156025 has been required to further improve braking performance. Meanwhile, recent vehicles have been significantly becoming quieter, and the tires have been required to maintain noise performance.

In EP 2 311 661 A1 a pneumatic tire is disclosed having a unidirectional tread pattern with a plurality of blocks, each defined by an equator-side longitudinal groove, a tread-edge-side longitudinal groove, a heel side transverse groove and a toe-side transverse groove. A further tire is disclosed in WO 2021/089960 A1.

The present invention has been made in view of the above circumstances, and a main object of the present invention is to provide a tire having improved braking performance while maintaining noise performance.

### SUMMARY OF THE INVENTION

The present invention is directed to a tire including a tread portion having a designated rotation direction. The tread portion includes a first tread end, a plurality of first inclined grooves extending at least from the first tread end toward a tire equator so as to be inclined to a leading edge side in the rotation direction, and a plurality of first land portions demarcated by the plurality of first inclined grooves. Each of the plurality of first inclined grooves includes a first groove wall on the leading edge side in the rotation direction and a second groove wall on a trailing edge side in the rotation direction. A first chamfered portion is formed on the first groove wall, and a second chamfered portion is formed on the second groove wall. In a cross-section orthogonal to a groove center line of the first inclined groove, a chamfered area S1 of the first chamfered portion is larger than a chamfered area S2 of the second chamfered portion. The chamfered area of the first chamfered portion increases toward an outer side in a tire axial direction.

As a result of adopting the above-described configuration, the tire according to the present invention can improve the braking performance while maintaining the noise performance.

### BRIEF DESCRIPTION OF THE DRAWINGS

FIG. 1 is a development of a tread portion of a tire according to one embodiment of the present invention;
FIG. 2 is an enlarged view of first inclined grooves and a first land portion in FIG. 1;
FIG. 3 is a cross-sectional view taken along a line A-A in FIG. 2;
FIG. 4 is an enlarged view of a first chamfered portion and a second chamfered portion in FIG. 3; and
FIG. 5 is an enlarged cross-sectional view showing a state when a conventional inclined groove is in contact with the ground.

### DETAILED DESCRIPTION

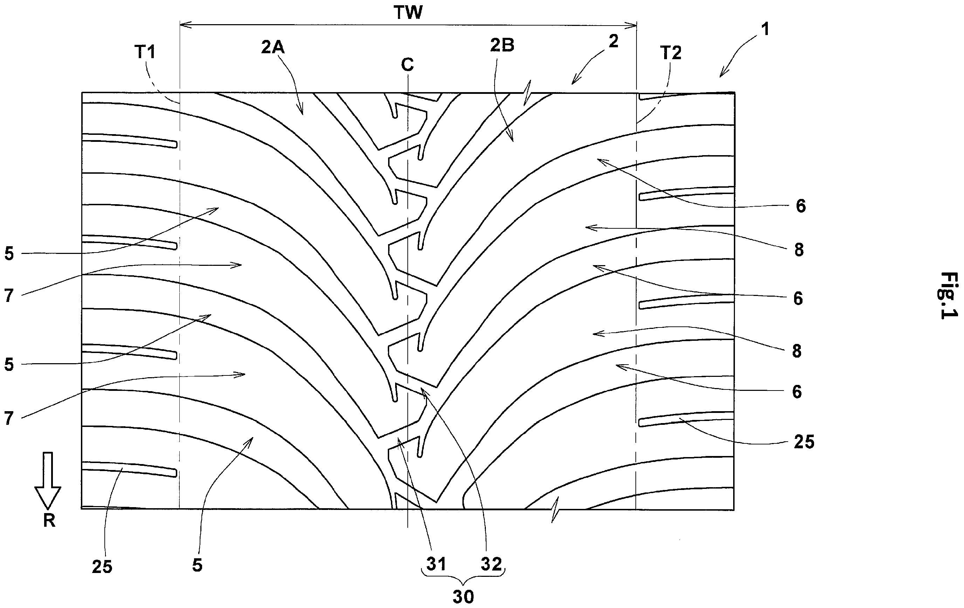

Hereinafter, an embodiment of the present invention will be described with reference to the drawings. FIG. 1 is a development of a tread portion 2 of a tire 1 according to the present embodiment (hereinafter, sometimes simply referred to as "tire"). As shown in FIG. 1, the tire 1 of the present embodiment is, for example, preferably a tire for a passenger car. However, the tire 1 of the present invention is not limited to thereto, and may be a heavy duty tire, for example.

The tire 1 of the present invention includes a tread portion 2 having a designated rotation direction R. The rotation direction R is indicated, for example, on each sidewall portion (not shown) by characters or marks.

The tread portion 2 of the tire 1 according to the present embodiment includes a first tread end T1 and a second tread end T2. In each drawing of the present application, a tread end on the left side of a tire equator C is referred to as first tread end T1, and a tread end on the right side of the tire equator C is referred to as second tread end T2. The tread portion 2 includes a first tread portion 2A on the first tread end T1 side with respect to the tire equator C and a second tread portion 2B on the second tread end T2 side with respect to the tire equator C. The first tread portion 2A and the second tread portion 2B are substantially line-symmetric with respect to the tire equator C except that the first tread portion 2A and the second tread portion 2B are displaced in the tire circumferential direction. Accordingly, each configuration of the first tread portion 2A can be applied to the second tread portion 2B.

The first tread end T1 and the second tread end T2 each indicate an outermost ground contact position in the tire axial direction in the case where 60% of a standardized load is applied to the tire 1 in a standardized state and the tire 1 is in contact with a flat plane at a camber angle of 0°.

The "standardized state" represents a state in which a tire is fitted on a standardized rim and is inflated to a standardized internal pressure and no load is applied to the tire when the tire is a pneumatic tire for which various standards are defined. For non-pneumatic tires and tires for which various standards are not defined, the standardized state represents a standard use state, corresponding to a purpose of use of the tire, in which no load is applied to the tire. In the present application, unless otherwise specified, the dimensions of the components of the tire and the like are represented by values measured in the standardized state. In the present application, unless otherwise specified, a known method can be used as a method for measuring the dimensions or compositions of material.

The "standardized rim" represents a rim that is defined by a standard for each tire, in a standard system including the standard on which the tire is based, and is, for example, "standard rim" in the JATMA standard, "Design Rim" in the TRA standard, or "Measuring Rim" in the ETRTO standard.

The "standardized internal pressure" represents an air pressure that is defined by a standard for each tire, in a standard system including the standard on which the tire is based, and is "maximum air pressure" in the JATMA standard, the maximum value recited in the table "TIRE LOAD LIMITS AT VARIOUS COLD INFLATION PRESSURES" in the TRA standard, or "INFLATION PRESSURE" in the ETRTO standard.

The "standardized load" represents a load that is defined by a standard for each tire, in a standard system including the standard on which the tire is based, for pneumatic tires for which various standards are defined, and is "maximum load capacity" in the JATMA standard, the maximum value recited in the table "TIRE LOAD LIMITS AT VARIOUS COLD INFLATION PRESSURES" in the TRA standard, or "LOAD CAPACITY" in the ETRTO standard. For tires for which various standards are not defined, the "standardized load" refers to the maximum load applicable when the tire is used, according to the above-described standards.

The tread portion 2 includes a plurality of first inclined grooves 5 and a plurality of first land portions 7. The first inclined grooves 5 extend at least from the first tread end T1 toward the tire equator C side so as to be inclined to a leading edge side (the lower side in each drawing of the present application) in the rotation direction R. The first inclined grooves 5 of the present embodiment terminate before reaching the tire equator C. For example, the first inclined grooves 5 may each cross the tire equator C. The first land portions 7 are demarcated by the first inclined grooves 5.

The tread portion 2 of the present embodiment includes a plurality of second inclined grooves 6 and a plurality of second land portions 8. The second inclined grooves 6 extend at least from the second tread end T2 toward the tire equator C side so as to be inclined to the leading edge side. The second land portions 8 are demarcated by the second inclined grooves 6. The second inclined grooves 6 have substantially the same configurations as the first inclined grooves 5, and the configurations of the first inclined grooves 5 can be applied to the second inclined grooves 6. In addition, the second land portions 8 have substantially the same configurations as the first land portions 7, and the configurations of the first land portions 7 can be applied to the second land portions 8.

Each of the first inclined grooves 5 and the second inclined grooves 6 has a groove width of, for example, 2 to 12 mm. In a preferable mode, each of the first inclined grooves 5 and the second inclined grooves 6 has the groove width reduced from the first tread end T1 side or the second tread end T2 side toward the tire equator C side. In addition, each of the first inclined grooves 5 and the second inclined grooves 6 has a depth of, for example, 5 to 15 mm. However, each dimension of the first inclined grooves 5 and the second inclined grooves 6 is not limited thereto.

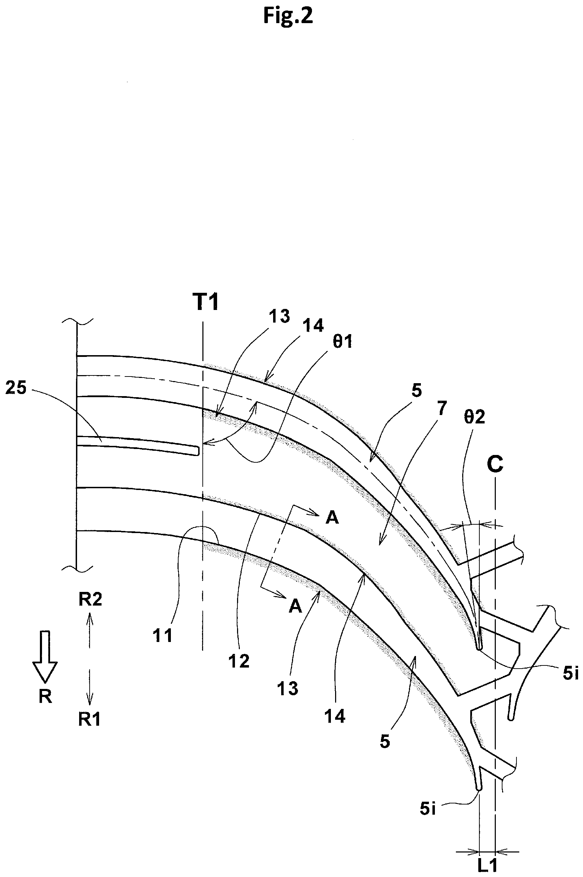

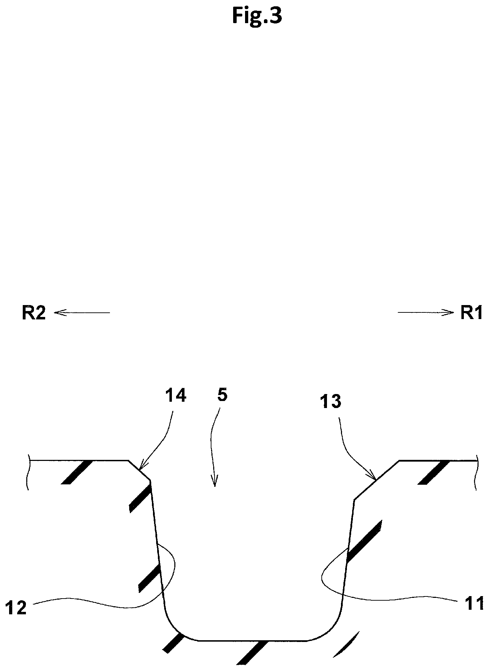

FIG. 2 is an enlarged view of two first inclined grooves 5 and one first land portion 7. FIG. 3 is a cross-sectional view taken along a line A-A in FIG. 2, as a diagram showing a cross-section of each first inclined groove 5. As shown in FIG. 2 and FIG. 3, in the present invention, each of the plurality of first inclined grooves 5 includes a first groove wall 11 on a leading edge side R1 in the rotation direction R and a second groove wall 12 on a trailing edge side R2 in the rotation direction R. In addition, a first chamfered portion 13 is formed on each first groove wall 11, and a second chamfered portion 14 is formed on each second groove wall 12. In FIG. 1, the first chamfered portions 13 and the second chamfered portions 14 are omitted. In FIG. 2, the first chamfered portions 13 and the second chamfered portions 14 are conceptually shown by dots for easy understanding.

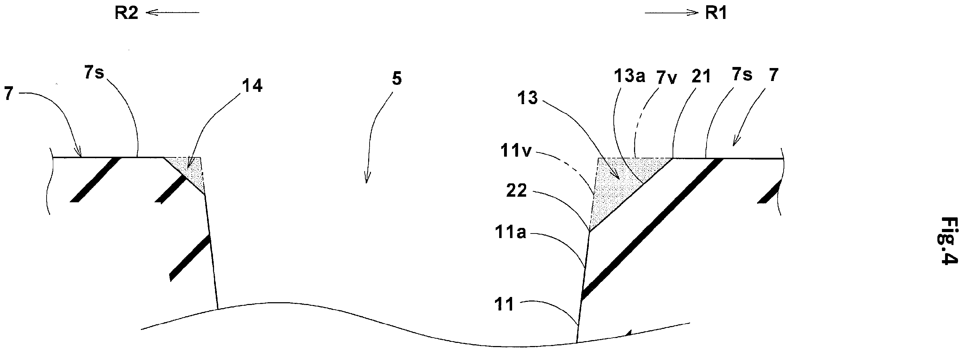

FIG. 4 shows an enlarged view of the first chamfered portion 13 and the second chamfered portion 14. In FIG. 4, a cross-section of the first chamfered portion 13 and a cross-section of the second chamfered portion 14 are dotted. As shown in FIG. 4, in the cross-section orthogonal to a groove center line of the first inclined groove 5, a chamfered area S1 of the first chamfered portion 13 is larger than a chamfered area S2 of the second chamfered portion 14. As a result of adopting the above-described configuration, the tire 1 of the present invention can improve the braking performance while maintaining the noise performance. The mechanism is as follows.

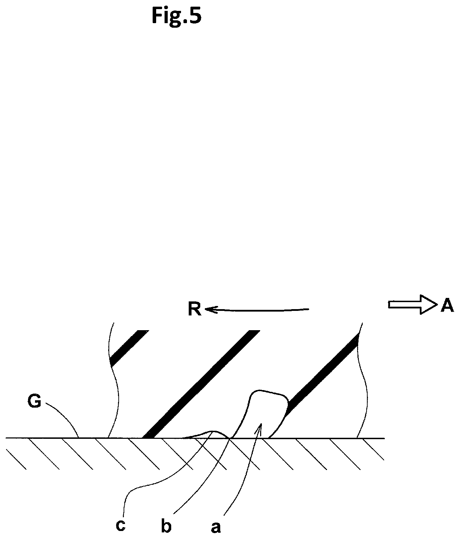

FIG. 5 is an enlarged cross-sectional view showing a state when a conventional inclined groove a in which no chamfered portion is provided is in contact with a road surface G. FIG. 5 shows a state during braking, and an arrow R represents the rotation direction of the tire and an arrow A represents the traveling direction of the tire. As shown in FIG. 5, generally, when a great braking force acts on the inclined groove a in which no chamfered portion is provided, an edge b on a leading edge side of the inclined groove a (synonym for an end on a trailing edge side of a tread surface of a land portion) is drawn in under the tread surface of the land portion, a land portion surface c in the vicinity of the edge b locally rises from the road surface, and thus grip cannot be sufficiently exhibited in some cases.

As shown in FIG. 4, since the first chamfered portion 13 is formed on each first groove wall 11 in the present invention, the above-described issue is prevented and the braking performance is improved. In addition, since the second chamfered portion 14 is formed on each second groove wall 12 in the tire 1 of the present invention, improvement of traction performance is also expected for the same reason as above.

In a conventional tire, the groove provided with a chamfered portion has an increased groove volume, thereby impairing the noise performance in some cases. However, the chamfered area S2 of the second chamfered portion 14 is relatively small in the present invention. Thus, the groove volume can be restrained from being excessively increased, while achieving the effect of improving braking performance, and the noise performance can be maintained. Owing to such a mechanism, the tire 1 of the present invention can improve the braking performance while maintaining the noise performance.

As shown in FIG. 4, the first chamfered portion 13 and the second chamfered portion 14 (hereinafter, sometimes simply referred to as "chamfered portion") each include a flat surface or a curved surface (hereinafter, both are sometimes collectively referred to as inclined surface) that is inclined so as to connect a main body of the groove wall of the first inclined groove 5 and a tread surface 7s of the first land portion 7 such that a pointed corner portion is not formed by the groove wall and the tread surface 7s.

The chamfered area S1 of the first chamfered portion 13 is defined as described below. That is, the chamfered area S1 refers to the area of a region surrounded by an inclined surface 13a of the first chamfered portion 13, a virtual tread surface 7v obtained by extending the tread surface 7s of the first land portion 7 in the groove width direction of the first inclined groove 5, and a first virtual groove wall 11v obtained by extending a main body 11a of the first groove wall 11 to the virtual tread surface 7v.

The inclined surface 13a of the first chamfered portion 13 refers to a surface from the main body 11a of the first groove wall 11 to the tread surface 7s of the first land portion 7. An end of the outer surface of the first land portion 7 that comes into contact with the flat plane, when 60% of the standardized load is applied to the tire 1 in the standardized state and the tire 1 is brought into contact with a flat plane at a camber angle of 0°, is a boundary 21 between the inclined surface 13a and the tread surface 7s. The virtual tread surface 7v is a virtual surface obtained by extending the tread surface 7s from the boundary 21 in the groove width direction. When the tread surface is curved, the virtual tread surface 7v corresponds to a curved line that extends from the boundary 21 while maintaining the curvature of the tread surface 7s in a cross-section of the first inclined groove 5.

The first virtual groove wall 11v is a virtual surface obtained by extending the main body 11a from a boundary 22 between the main body 11a of the first groove wall 11 and the inclined surface 13a to the virtual tread surface 7v. The boundary 22 between the main body 11a of the first groove wall 11 and the inclined surface 13a is a position where an angle of the first groove wall 11 relative to the tire radial direction is abruptly changed. When the abruptly changed position is an area having a substantial width, the position closest to the groove center line corresponds to the boundary 22.

In addition, needless to say, the chamfered area S2 of the second chamfered portion 14 is defined in the same way as the chamfered area S1 of the first chamfered portion 13.

Hereinafter, the present embodiment will be described in more detail. The configurations described below represent specific modes of the present embodiment. Therefore, needless to say, even when the configurations described below are not provided, the present invention can exhibit the above-described effects. In addition, even when any one of the configurations described below is independently applied to the tire according to the present invention having the above-described characteristics, performance improvement corresponding to each configuration can be expected. Furthermore, when some of the configurations described below are applied in combination, complex performance improvement corresponding to each configuration can be expected.

As shown in FIG. 2, an angle of each first inclined groove 5 relative to the tire circumferential direction preferably increases toward the outer side in the tire axial direction. In a preferable mode, the angle continuously increases toward the outer side in the tire axial direction. Accordingly, each first inclined groove 5 extends so as to be curved. Specifically, an angle θ1 of each first inclined groove 5 relative to the tire circumferential direction at the first tread end T1 is preferably 80 to 90°. In addition, an angle θ2 of each first inclined groove 5 relative to the tire circumferential direction at the inner end 5i on the tire equator C side of the first inclined groove 5 is, for example, not less than 5°, and preferably 30 to 70°. Accordingly, the braking performance and the cornering performance are improved in a well-balanced manner.

In each first inclined groove 5, a distance L1 in the tire axial direction from the inner end 5i on the tire equator C side to the tire equator C is, for example, not greater than 10% of a tread width TW (shown in FIG. 1) and preferably not greater than 5% thereof. The tread width TW corresponds to a distance in the tire axial direction from the first tread end T1 to the second tread end T2 in the standardized state. In addition, the first inclined grooves 5 extend beyond the first tread end T1. Accordingly, excellent wet performance can be obtained.

In the present invention, as long as the first chamfered portion 13 and the second chamfered portion 14 are each disposed on a part of each first inclined groove 5, the above-described effect can be expected to a certain degree. However, from the viewpoint of more reliably exhibiting the above-described effects, the first chamfered portion 13 and the second chamfered portion 14 are disposed preferably in each first inclined groove 5 in a range of not less than 50% of an entire length thereof (the entire length between the tire equator C and the first tread end T1). In a more preferable mode, the first chamfered portion 13 and the second chamfered portion 14 of the present embodiment are disposed in each first inclined groove 5 over the entire length thereof between the tire equator C and the first tread end T1.

From the same viewpoint, the chamfered area S1 is preferably larger than the chamfered area S2, in each first inclined groove 5 in the range of not less than 50% of the entire length thereof. In a more preferable mode of the present embodiment, the chamfered area S1 is larger than the chamfered area S2, in each first inclined groove 5 over the entire length thereof.

As shown in FIG. 4, in the present embodiment, the tread surfaces 7s of the first land portions 7, the groove walls of the first inclined groove 5, and the inclined surfaces of the chamfered portions are each substantially formed planar, and formed linear in a cross-sectional view of the first inclined groove 5. Accordingly, the first chamfered portion 13 and the second chamfered portion 14 are each, for example, formed in an obtuse-angled triangular shape in a cross-sectional view. In a preferable mode, the cross-sectional shapes are formed to be similar to each other.

The chamfered area S1 and the chamfered area S2 are each not less than 0.5 mm² and preferably 0.5 to 2.0 mm². However, the chamfered area S1 and the chamfered area S2 are not limited thereto.

The chamfered area S1 is preferably 1.1 times or more the chamfered area S2 and more preferably 1.2 times or more the chamfered area S2, and preferably 1.5 times or less the chamfered area S2 and more preferably 1.4 times or less the chamfered area S2. Accordingly, the noise performance and the braking performance are improved in a well-balanced manner. In each of FIG. 3 and FIG. 4, the chamfered area S1 and the chamfered area S2 are shown so that the difference between the chamfered area S1 and the chamfered area S2 is larger than the actual difference for easy understanding of the technical matters of the present invention.

The chamfered area S1 of each first chamfered portion 13 increases toward the outer side in the tire axial direction. The chamfered area S1 of the first chamfered portion 13 of the present embodiment continuously increases from the inner end 5i of the first inclined groove 5 to the first tread end T1. Accordingly, the chamfered area S1 is smaller on the tire equator C side which contributes less to braking performance, and the noise performance can be effectively maintained.

From the same viewpoint, the chamfered area S2 of each second chamfered portion 14 preferably increases toward the outer side in the tire axial direction. The chamfered area S2 of the second chamfered portion 14 of the present embodiment continuously increases from the inner end 5i of the first inclined groove 5 to the first tread end T1. Accordingly, the above-described effects can be further assuredly exhibited.

As shown in FIG. 2, each first land portion 7 is provided with neither grooves nor sipes in a range between the tire equator C and the first tread end T1, and is formed as a smooth tread surface. Such a first land portion 7 can exhibit excellent traction performance and braking performance.

Each first land portion 7 is provided with a lateral narrow groove 25 extending in the tire axial direction, on the outer side of the first tread end T1 in the tire axial direction. Such a lateral narrow groove 25 serves to enhance wet performance and anti-wandering performance.

As shown in FIG. 1, the tread portion 2 of the present embodiment is provided with a plurality of lateral grooves 30 each extending from the first inclined groove 5 to the second inclined groove 6. The lateral grooves 30 include first lateral grooves 31 inclined relative to the tire axial direction and second lateral grooves 32 inclined, relative to the tire axial direction, in a direction opposite to that of the first lateral grooves 31. The first lateral grooves 31 and the second lateral grooves 32 are alternated in the tire circumferential direction. Such first lateral grooves 31 and second lateral grooves 32 serve to enhance wet performance.

## Claims

1. A tire (1) comprising a tread portion (2) having a designated rotation direction (R), wherein
the tread portion (2) includes:
a first tread end (Tl);
a plurality of first inclined grooves (5) extending at least from the first tread end (T1) toward a tire equator (C) so as to be inclined to a leading edge side (R1) in the rotation direction (R); and
a plurality of first land portions (7) demarcated by the plurality of first inclined grooves (5),
each of the plurality of first inclined grooves (5) includes a first groove wall (11) on the leading edge side (R1) in the rotation direction (R) and a second groove wall (12) on a trailing edge side (R2) in the rotation direction (R),
a first chamfered portion (13) is formed on the first groove wall (11),
a second chamfered portion (14) is formed on the second groove wall (12),
in a cross-section orthogonal to a groove center line of the first inclined groove (5), a chamfered area (S1) of the first chamfered portion (13) is larger than a chamfered area (S2) of the second chamfered portion (14), and
wherein the chamfered area (S1) of the first chamfered portion (13) increases toward an outer side in a tire axial direction.

2. The tire (1) according to claim 1, wherein the chamfered area (S1) is 1.1 times or more the chamfered area (S2).

3. The tire (1) according to claim 1 or 2, wherein the chamfered area (S1) is 1.5 times or less the chamfered area (S2).

4. The tire (1) according to any one of claims 1 to 3, wherein the chamfered area (S2) of the second chamfered portion (14) increases toward the outer side in the tire axial direction.

5. The tire (1) according to any one of claims 1 to 4, wherein the chamfered area (S1) is larger than the chamfered area (S2), in each first inclined groove (5) in a range of not less than 50% of an entire length of the first inclined groove (5).

6. The tire (1) according to any one of claims 1 to 5, wherein the chamfered area (S1) is larger than the chamfered area (S2), in each first inclined groove (5) over the entire length of the first inclined groove (5).

7. The tire (1) according to any one of claims 1 to 6, wherein an angle of each first inclined groove (5) relative to a tire circumferential direction increases toward the outer side in the tire axial direction.

8. The tire (1) according to any one of claims 1 to 7, wherein an angle (θ1) of each first inclined groove (5) relative to the tire circumferential direction at the first tread end (T1) is 80 to 90°.

9. The tire (1) according to any one of claims 1 to 8, wherein
each first inclined groove (5) includes an inner end (5i) on the tire equator (C) side, and
an angle (θ2) of each first inclined groove (5) relative to the tire circumferential direction at the inner end (5i) is 30 to 70°.

## Patentansprüche

1. Reifen (1), umfassend einen Laufflächenabschnitt (2) mit einer bestimmten Drehrichtung (R), wobei
der Laufflächenabschnitt (2) umfasst:
ein erstes Laufflächenende (T1);
eine Vielzahl von ersten geneigten Rillen (5), die sich zumindest von dem ersten Laufflächenende (T1) zu einem Reifenäquator (C) erstrecken, so dass sie zu einer Vorderkantenseite (R1) in der Drehrichtung (R) geneigt sind; und
eine Vielzahl von ersten Landabschnitten (7), die durch die Vielzahl von ersten geneigten Rillen (5) abgegrenzt sind,
jede der Vielzahl von ersten geneigten Rillen (5) eine erste Rillenwand (11) auf der Vorderkantenseite (R1) in der Drehrichtung (R) und eine zweite Rillenwand (12) auf einer Hinterkantenseite (R2) in der Drehrichtung (R) umfasst,
ein erster angefaster Abschnitt (13) an der ersten Rillenwand (11) ausgebildet ist,
ein zweiter angefaster Abschnitt (14) an der zweiten Rillenwand (12) ausgebildet ist,
in einem Querschnitt orthogonal zu einer Rillenmittellinie der ersten geneigten Rille (5) eine angefaste Fläche (S1) des ersten angefasten Abschnitts (13) größer als eine angefaste Fläche (S2) des zweiten angefasten Abschnitts (14) ist, und
wobei die angefaste Fläche (S1) des ersten angefasten Abschnitts (13) zu einer Außenseite hin in einer Reifenaxialrichtung zunimmt.

2. Reifen (1) nach Anspruch 1, wobei die angefaste Fläche (S1) das 1,1-fache oder mehr der angefasten Fläche (S2) beträgt.

3. Reifen (1) nach Anspruch 1 oder 2, wobei die angefaste Fläche (S1) das 1,5-fache oder weniger der angefasten Fläche (S2) beträgt.

4. Reifen (1) nach einem der Ansprüche 1 bis 3, wobei die angefaste Fläche (S2) des zweiten angefasten Abschnitts (14) in Richtung der Außenseite in der Reifenaxialrichtung zunimmt.

5. Reifen (1) nach einem der Ansprüche 1 bis 4, wobei die angefaste Fläche (S1) in jeder ersten geneigten Rille (5) in einem Bereich von nicht weniger als 50 % einer Gesamtlänge der ersten geneigten Rille (5) größer als die angefaste Fläche (S2) ist.

6. Reifen (1) nach einem der Ansprüche 1 bis 5, wobei die angefaste Fläche (S1) in jeder ersten geneigten Rille (5) über die gesamte Länge der ersten geneigten Rille (5) größer als die angefaste Fläche (S2) ist.

7. Reifen (1) nach einem der Ansprüche 1 bis 6, wobei ein Winkel jeder ersten geneigten Rille (5) relativ zu einer Reifenumfangsrichtung zu der Außenseite hin in der Reifenaxialrichtung zunimmt.

8. Reifen (1) nach einem der Ansprüche 1 bis 7, wobei ein Winkel (θ1) jeder ersten geneigten Rille (5) relativ zu der Reifenumfangsrichtung an dem ersten Laufflächenende (T1) 80 bis 90° beträgt.

9. Reifen (1) nach einem der Ansprüche 1 bis 8, wobei
jede erste geneigte Rille (5) ein inneres Ende (5i) auf der Seite des Reifenäquators (C) umfasst, und
ein Winkel (θ2) jeder ersten geneigten Rille (5) relativ zu der Reifenumfangsrichtung an dem inneren Ende (5i) 30 bis 70° beträgt.

## Revendications

1. Pneumatique (1) comprenant une partie bande de roulement (2) ayant une direction de rotation désignée (R), dans lequel
la partie bande de roulement (2) comporte :
une première extrémité de bande de roulement (T1) ;
une pluralité de premières rainures inclinées (5) s'étendant au moins à partir de la première extrémité de bande de roulement (T1) vers un centre de pneumatique (C) de sorte à être inclinées vers un côté du bord d'attaque (R1) dans la direction de rotation (R) ; et
une pluralité de premières parties de méplat (7) démarquées par la pluralité de premières rainures inclinées (5),
chacune de la pluralité des premières rainures inclinées (5) comporte une première paroi de rainure (11) sur le côté de bord d'attaque (R1) dans la direction de rotation (R) et une deuxième paroi de rainure (12) sur un côté de bord de fuite (R2) dans la direction de rotation (R),
une première partie chanfreinée (13) est formée sur la première paroi de rainure (11), une seconde partie chanfreinée (14) est formée sur la deuxième paroi de rainure (12), dans une section transversale orthogonale par rapport à une ligne centrale de rainure de la première rainure inclinée (5), une zone chanfreinée (S1) de la première partie chanfreinée (13) est plus grande qu'une zone chanfreinée (S2) de la seconde partie chanfreinée (14), et
dans lequel la zone chanfreinée (S1) de la première partie chanfreinée (13) augmente vers un côté extérieur dans la direction axiale du pneumatique.

2. Pneumatique (1) selon la revendication 1, dans lequel la zone chanfreinée (S1) est 1,1 fois ou plus égale à la zone chanfreinée (S2).

3. Pneumatique (1) selon la revendication 1 ou la revendication 2, dans lequel la zone chanfreinée (S1) est 1,5 fois ou moins. égale à la zone chanfreinée (S2).

4. Pneumatique (1) selon l'une quelconque des revendications 1 à 3, dans lequel la zone chanfreinée (S2) de la seconde partie chanfreinée (14) augmente vers le côté extérieur dans la direction axiale du pneumatique.

5. Pneumatique (1) selon l'une quelconque des revendications 1 à 4, dans lequel la zone chanfreinée (S1) est plus grande que la zone chanfreinée (S2), dans chaque première rainure inclinée (5) dans une plage de pas moins de 50 % d'une longueur entière de la première rainure inclinée (5).

6. Pneumatique (1) selon l'une quelconque des revendications 1 à 5, dans lequel la zone chanfreinée (S1) est plus grande que la zone chanfreinée (S2) dans chaque première rainure inclinée (5) sur toute la longueur de la première rainure inclinée (5).

7. Pneumatique (1) selon l'une quelconque des revendications 1 à 6, dans lequel un angle de chaque première rainure inclinée (5) par rapport à une direction circonférentielle de pneumatique augmente vers un côté extérieur dans la direction axiale du pneumatique.

8. Pneumatique (1) selon l'une quelconque des revendications 1 à 7, dans lequel un angle (θ1) de chaque première rainure inclinée (5) par rapport à la direction circonférentielle de pneumatique à la première extrémité de bande de roulement (T1) est de 80 à 90°.

9. Pneumatique (1) selon l'une quelconque des revendications 1 à 8, dans lequel
chaque première rainure inclinée (5) comporte une extrémité intérieure (5i) sur le côté du centre de pneumatique (C), et
un angle (θ2) de chaque première rainure inclinée (5) par rapport à la direction circonférentielle de pneumatique à l'extrémité intérieure (5i) est de 30 à 70°.
